Europäisches Patentamt

European Patent Office

Office européen des brevets

(19)

(11) Veröffentlichungsnummer: **0 028 728**
**B1**

(12) **EUROPÄISCHE PATENTSCHRIFT**

(45) Veröffentlichungstag der Patentschrift:
06.04.83

(21) Anmeldenummer: 80106329.8

(22) Anmeldetag: 17.10.80

(51) Int. Cl.³: **C 02 F 3/20**

(54) Einrichtung zum feinblasigen Belüften von Wasser.

(30) Priorität: 22.10.79 DE 2942607

(43) Veröffentlichungstag der Anmeldung:
20.05.81 Patentblatt 81/20

(45) Bekanntmachung des Hinweises auf die Patenterteilung:
06.04.83 Patentblatt 83/14

(84) Benannte Vertragsstaaten:
AT CH DE FR GB IT LI NL SE

(56) Entgegenhaltungen:
AT-B-265 992
AT-B-288 985
DE-A-2 035 651
DE-A-2 261 994
DE-C-507 294
GB-A-802 374
US-A-3 432 154

(73) Patentinhaber: Messner, Rudolf, Laufer Mühle,
D-8551 Adelsdorf (DE)

(72) Erfinder: Messner, Rudolf, Laufer Mühle,
D-8551 Adelsdorf (DE)

(74) Vertreter: Schweinzer, Karl, Dr. Dipl.-Phys. et al,
Patentanwälte Dipl.-Ing. H. Stehmann Dipl.-Phys. Dr. K.
Schweinzer Essenweinstrasse 4-6,
D-8500 Nürnberg 70 (DE)

ACTORUM AG

«Einrichtung zum feinblasigen Belüften von Wasser»

Die Erfindung betrifft eine Einrichtung zum feinblasigen Belüften von Wasser durch unter dem Wasserspiegel angeordnete, an einer Luftzuführungsleitung angeschlossene Luftverteiler, bestehend aus einer Halterung mit einer in ihr eingespannten, gelochten Luftverteilerfolie, einer Luftzuführöffnung und einer dichten Unterlage, gegen die sich die Luftverteiler bei fehlender oder geringer Luftzufuhr dichtend auflegen, wobei die dichte Unterlage aus einer ungelochten Bodenfolie besteht, und die Bodenfolie mit der gelochten Folie in der Halterung festgeklemmt und verschraubt ist und ferner die gelochte Folie im Bereich der Luftzuführöffnung abgedichtet ist.

Eine derartige Einrichtung ist aus der DE-A-2 035 651 bekannt. Bei Zufuhr von Luft in das Innere dieser Einrichtung wölbt sich die gelochte Luftverteilerfolie sehr stark auf, so dass sich die an den Einspannrändern befindlichen Luftaustrittsöffnungen verschliessen und die Luft nur an den Luftaustrittsöffnungen im oberen Bogenbereich der Luftverteilerfolie austreten kann. Hinzu kommt, dass durch die Wölbung der Wasserdruck auf die Luftverteilerfolie im Bereich der Einspannung grösser ist als im Bereich der oberen Wölbung, so dass zusätzlich der Austritt von Luft im Bereich der Einspannung verhindert wird. Deshalb ergibt sich in Längsrichtung einer derartigen Einrichtung ein sehr schmaler Streifen, längs dem die Luft austreten kann, während der übrige Bereich der Luftverteilerfolienfläche nichts zur Belüftung des Wassers beiträgt.

Bei einer anderen bekannten Einrichtung (US-A-3 432 154) sind zwischen zwei Tragestangen zusammengeschweisste, elastische Kunststoffbahnen angeordnet. Die Luftaustrittsöffnungen sind in der oberen Luftverteilerfolie eingeformt. Mittels einer Schwimmplatte aus Schaumstoff wird eine zweite Folie bei abgeschalteter Luftzufuhr von unten gegen die Öffnungen der Luftverteilerfolie gedrückt.

Bei dieser bekannten Einrichtung ist nur ein kleiner Bereich jeweils für den Luftaustritt vorgesehen.

Bei einer weiteren bekannten Belüftungsvorrichtung für Abwässer und ähnliche Flüssigkeiten (DE-U-7 130 795) ist ein mit einer Druckquelle verbundener, zweiarmiger, mit Öffnungen versehener, hohlkörperartiger Träger vorhanden, der an den Enden verschlossen ist und über den eine Umhüllung aus perforiertem elastischem Material so angeordnet ist, dass diese den Träger schlauchartig umgibt.

Auch bei dieser Belüftungsvorrichtung ergibt sich nur eine linienartige Luftzufuhr in das Wasser. Die Arme der Belüftungsvorrichtung werden relativ schnell von faserartigen Sinkstoffen im Abwasser umschlungen, so dass der Luftaustritt verringert oder ganz unterbunden wird. Bei teilweiser Zusetzung der Öffnungen aus elastischem Material treten durch den dort erhöhten Luftdruck besonders grosse Luftblasen aus, so dass es in einem Belebtschlammbecken, in das derartige Belüftungsvorrichtungen eingesetzt sind, zu starken Wasserbewegungen und Wasserwirbeln kommt, wodurch die Sauerstoffausnutzung der zugeführten Luft entscheidend herabgesetzt wird.

Es ist auch schon bekannt, zur Sauerstoffeintragung in Wasser, insbesondere Abwasser der biologischen Reinigungsstufe Leitungen aus semipermeablen Wänden, z.B. auf Silikon-Kautschukbasis, vorzusehen, wobei entweder das Wasser in diesen Leitungen geführt und Sauerstoff aus der umgebenden Luft in das Wasser diffundieren kann oder in den Leitungen Luft geführt wird, die nunmehr in umgekehrter Richtung in das Wasser diffundieren kann (DE-A-1 584 935).

Um eine in weiten Grenzen regelbare feinblasige Belüftung des Abwassers auch nach längerer Unterbrechung der Luftzufuhr zu ermöglichen, ist nach AT-B-288 985 als Lüftungselement ein aus elastischem Werkstoff bestehender flacher Luftschlauch bekannt, der an seiner oberen Wandung mit einer Vielzahl von Luftaustrittsöffnungen versehen und dessen Längsseiten als Schlaufen zur Aufnahme von Traggliedern ausgebildet sind, wobei das eine Ende verschlossen und das andere Ende an eine Luftzuführungsleitung angeschlossen ist. Weiter ist nach dieser Schrift vorgesehen, dass die Tragglieder stangenförmig ausgebildet sind und einen solchen Abstand voneinander besitzen, dass der Luftschlauch durch die von seinen Schlaufen umschlossenen Tragglieder in seiner Flachlage eine Vorspannung erhält.

Dieser Luftschlauch hat jedoch den Nachteil, dass dessen Wirkungsfläche, also die mit Luftdurchtrittsöffnungen versehene obere Wandung wegen der seitlichen, verhältnismässig breiten Halterungen nicht optimal gestaltet werden kann. Dem weiteren Nachteil der übermässigen Auswölbung des Schlauches soll nach dieser Schrift durch Verschweissen der Schlauchwandungen begegnet werden, was allerdings einen ungelochten Mittelstreifen ergibt. Dadurch wird die mit Luftdurchtrittsöffnungen versehene Fläche weiter verkleinert.

Schliesslich ist nach der AT-B-265 992 eine Belüftungseinrichtung mit einer gelochten Abdeckfolie nach der Gattung des Erfindungsvorschlages bekannt geworden, deren Ausführung jedoch unter anderem durch eine massgerechte, jeweils proportional zur Materialstärke ausgerichtete Abstandhaltung der Düsen untereinander gekennzeichnet ist und vor allem dadurch, dass die Löcher der Abdeckfolie düsenartig mit glatter konischer Wandung sowie mit einer Randwulst ausgebildet und durch Einstechen mittels beheizter Nadeln in die Abdeckfolie hergestellt sind.

Die bekannten Einrichtungen erfüllen die an eine Einrichtung zum feinblasigen Belüften gestellten Forderungen der Praxis nicht oder nur in unzureichendem Masse. Insbesondere ist es nicht möglich, ein grösseres Becken gleichmässig zu belüften. Ferner schwankt die Blasengrösse in Abhängigkeit vom Ort des Luftaustrittes bei der jeweiligen Vorrichtung und einzelne dieser Vorrichtungen sind besonders empfindlich gegen Schlammabsetzungen oder faserige Abfallprodukte im Wasser. Ferner zeigt es sich, dass bei den bisher bekannten Einrichtungen die Grösse der Blasen mit der Menge der zugeführten Luft oder mit deren Druck anstieg, so dass keine gleichbleibende Blasengrösse erreichbar war, obwohl möglichst kleine Blasen gewünscht sind, um eine grosse Oberfläche und demzufolge eine gute $O_2$-Ausnützung zu schaffen.

Der Erfindung liegt demgegenüber die Aufgabe zugrunde, eine Einrichtung der eingangs erläuterten Art derart auszugestalten, dass sehr kleine Blasen von Luft- oder Sauerstoff mit einem möglichst gleichmässigen Durchmesser über eine grosse Fläche gleichmässig abgegeben werden, die eine grosse Verweildauer wegen ihres geringen Auftriebes aufweisen und wegen ihrer besseren $O_2$-Ausnützung eine grössere Wirtschaftlichkeit, d.h. eine erhöhte Energieeinsparung ergeben.

Diese Aufgabe wird nach der Erfindung im wesentlichen bei einer Einrichtung zum feinblasigen Belüften von Wasser der eingangs genannten Art dadurch gelöst, dass die Bodenfolie und die gelochte Luftverteiler-Folie an ihren Rändern verklebt und mittels Klemmprofilen verschraubt und festgeklemmt sind, dass über der gelochten Luftverteiler-Folie zwischen den Klemmprofilen verlaufende, obere Stege angeordnet sind und dass zur Abdichtung der gelochten Luftverteiler-Folie im Bereich der Luftzuführöffnung ein Abdichtrondell mit der gelochten Folie verbunden ist.

Besonders zweckmässig ist es, wenn unterhalb der Bodenfolie untere Stege angeordnet sind.

Die erfindungsgemässe Einrichtung erlaubt es, beispielsweise den ganzen Boden eines Belebtschlamm-Beckens zu belegen, so dass praktisch eine vollflächige Belüftung des Wassers eintritt, wodurch Strömungen im Wasser verhindert werden.

Durch die erfindungsgemässe Anordnung der Stege wird ein Durchbiegen oder Aufwölben der Folien verhindert, so dass keinerlei Druckunterschiede des darüber findlichen Wassers auf die Luftverteilerfolie eintreten können.

Besonders vorteilhaft ist es, wenn, nach einem weiteren Merkmal der Erfindung, die oberen Stege und die unteren Stege parallel verlaufend versetzt zueinander angeordnet sind.

Gemäss einem abgewandelten Ausführungsbeispiel der Erfindung können die oberen Stege und die unteren Stege sich kreuzend angeordnet sein.

Es hat sich als zweckmässig erwiesen, für die Bodenfolie und/oder die gelochte Folie Folien mit einer Dicke von 1 bis 1,5 mm zu verwenden.

Als zweckmässiges Material kann für die Bodenfolie und/oder die gelochte Folie synthetischer Kautschuk verwendet werden.

Bei einem Ausführungsbeispiel der Erfindung weist die gelochte Folie mindestens teilweise konisch ausgebildete Luftdurchtrittsöffnungen auf. Dabei ist in vorteilhafter Weise der Durchmesser der Luftdurchtrittsöffnungen an der der Bodenfolie zugewandten Seite der gelochten Folie zu etwa 0,3 mm gewählt.

Besonders günstig hat es sich für den Luftaustritt bei Luftzufuhr und zur Abdichtung bei fehlender Luftzufuhr erwiesen, wenn der Konuswinkel der Luftdurchtrittsöffnungen etwa 5° beträgt.

Nach weiterer Ausgestaltung der Erfindung ist es vorteilhaft, die gelochte Folie an ihrer der Bodenfolie zugewandten Oberfläche mit einer glasfaserverstärkten Schicht zu versehen. Diese glasfaserverstärkte Schicht bewirkt eine besondere Steifigkeit der gelochten Folie, so dass jegliche Auswölbung aufgrund des Druckes der zugeführten Luft mit Sicherheit verhindert wird.

Die erfindungsgemässen Einrichtungen können bei einer Standardbreite entsprechend den zur Verfügung stehenden Folienbreiten in verschieden grossen Längen hergestellt werden. Dadurch ist eine Anpassung an die jeweiligen Gegebenheiten in einfacher Weise möglich.

Weitere Vorteile und Einzelheiten der Erfindung werden anhand der Zeichnung näher erläutert, die schematisch ein Ausführungsbeispiel darstellt. Dabei zeigt:

Fig. 1 eine Draufsicht auf eine erfindungsgemässe Einrichtung,

Fig. 2 einen Schnitt durch ein Element nach Fig. 1 entsprechend der Linie II–II in Fig. 1,

Fig. 3 in vergrössertem Massstab einen Teilausschnitt aus dem Randbereich eines Elementes nach Fig. 1 oder 2, und

Fig. 4 einen Teilschnitt durch eine obere Folie (Luftverteilerfolie).

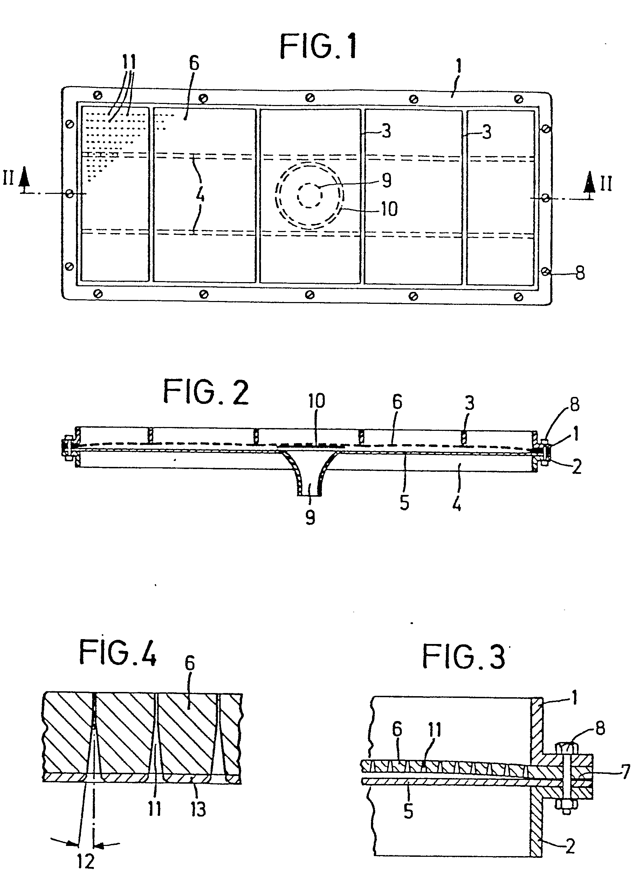

Bei dem in Fig. 1 dargestellten Ausführungsbeispiel einer Einrichtung zum feinblasigen Belüften von Wasser ist eine Einspannung vorgesehen, bestehend aus oberen Winkeleisen 1, die mit entsprechenden unteren Winkeleisen 2 (vgl. Fig. 2 und 3) mittels Schrauben 8 verschraubt sind, wobei zwischen den Winkeleisen 1, 2 eine untere dichte Bodenfolie 5 und eine obere gelochte Folie 6 eingespannt sind. Die Ränder der beiden Folien 5 und 6 sind dabei mit einer Kleberschicht 7 luftdicht verklebt.

Die Einrichtung nach Fig. 1 ist rechteckförmig ausgebildet, jedoch können auch andere Umrissformen vorgesehen sein. Die rechteckige Ausbildung ist besonders zweckmässig, da die Folien 5 und 6 herstellungsbedingt in Form von Bahnen geliefert werden, so dass bei rechteckigen Einrichtungen kein Folienabfall entsteht.

Die gelochte Folie 6 weist Luftaustrittsöffnungen 11 auf, die gleichmässig über die gesamte Oberfläche der gelochten Folie 6 verteilt angeordnet sind, wobei die Anordnung reihenförmig oder in versetzten Reihen oder auch in anderer geometrischer Konfiguration erfolgen kann. Im allgemeinen ist der Abstand zwischen benachbarten Luftaustrittsöffnungen 11 ca. 2 mm gewählt.

Mit dem oberen Winkeleisen 1 sind obere Stege 3 entweder verbunden, verschweisst oder verschraubt oder dergleichen. Bei Verwendung von Kunststoffprofilen für die Klemmprofile 1 können die Stege 3 auch einstückig mit den Winkel- bzw. Klemmprofilen 1 ausgebildet sein. In Fig. 1 sind untere Stege 4 strichliert dargestellt. Bei dem Ausführungsbeispiel gemäss Fig. 1 kreuzen sich die oberen Stege 3 mit den unteren Stegen 4. Es ist jedoch auch möglich, die Stege parallel zueinander anzuordnen, wobei jedoch die oberen Stege 3 gegenüber den unteren Stegen 4 versetzt angeordnet sind.

Eine Luftzuführöffnung 9 ist nach dem Ausführungsbeispiel nach Fig. 1 in der Mitte der Einrichtung dargestellt, kann aber auch, je nach Bedarf, in der Nähe einer Randkante oder einer Querkante vorgesehen sein. Oberhalb der Luftzuführöffnung 9 ist die gelochte Folie 6 durch ein Abdichtrondell 10 abgedichtet, das heisst im Bereich des Abdichtrondells 10 können keine Luftblasen nach oben aus der Folie 6 austreten. Bei Abschaltung der Luftzufuhr legt sich die obere Folie 6 auf die Bodenfolie 5 und insbesondere das Abdichtrondell 10 auf die Luftzuführöffnung 9, so dass sich ein selbsttätig wirkendes Ventil bildet, das den Eintritt von Wasser, Schlamm oder anderen Teilchen in die Luftzuführöffnung 9 verhindert. Die Luftzuführöffnung 9 kann mit einer Zufuhrleitung versehen sein, die entweder direkt mit einer rasterartig verlegten Luftzuführleitung über dem Boden eines Belebungsbeckens einer Kläranlage angeordnet ist, oder mit Winkelrohrstücken verschraubt sein, so dass die Luftzufuhr seitlich der Einrichtung durch geeignete Luftzufuhrrohre herbeigeführt werden kann. Die seitliche Ausführung empfiehlt sich insbesondere dann, wenn die beschriebene Einrichtung in relativ schmalen aber langen Becken einer Kläranlage eingesetzt ist.

Aus dem in Fig. 2 dargestellten Längsschnitt der Einrichtung nach Fig. 1, entsprechend der Linie II–II in Fig. 1, ist die Ausbildung der Luftzuführöffnung 9 und die Anordnung des Abdichtrondells 10 deutlich zu erkennen.

Die Fig. 3 zeigt in vergrössertem Massstab einen Randausschnitt, aus dem sich die Verklebung der Bodenfolie 5 mit der gelochten Folie 6 und die Einklemmung mittels der Klemmprofile 1, 2 und der Schrauben 8 sehen lässt.

In Fig. 4 ist in vergrössertem Massstab ein Teilschnitt durch eine gelochte Folie 6 dargestellt. Die Luftaustrittsöffnungen 11 sind dabei konisch, mit einem Konuswinkel 12 von beispielsweise 5°, ausgebildet, wobei der letzte Teil der Öffnung etwa zylindrisch bis zur Oberfläche der gelochten Folie 6 verläuft. Die Ausbildung kann aber auch derart getroffen werden, dass die Spitze des Lochkegels in der Oberfläche liegt. Durch die Erzeugung der Löcher 11 kann eine Randverstärkung der unteren Basis der Luftaustrittsöffnungen 11 auftreten. Der Durchmesser der unteren Öffnung der Luftaustrittsöffnungen 11 beträgt etwa 0,3 mm. In Fig. 4 ist noch eine weitere Ausgestaltung gezeigt, wobei nämlich an der der Bodenfolie 5 zugewandten Seite der gelochten Folie 6 eine Glasfaser-Kunststoffschicht 13 vorgesehen ist. Diese Glasfaser-Kunststoffschicht 13 verleiht der Folie 6 eine besondere Steifigkeit, so dass ein Aufwölben der gelochten Folie 6 bei Luftzufuhr durch die Luftzuführöffnung 9 in das Innere der Einrichtung auch zwischen den Stegen 3 mit Sicherheit vermieden wird. Dadurch ergibt sich ein völlig gleichmässiger Luftaustritt über die gesamte freie Oberfläche der gelochten Folie 6 bei überall gleichem Wasserdruck und überall gleichem Luftinnendruck.

Die feinblasige Belüftung des Wassers bei gleichbleibender Blasengrösse und Verhinderung von Wasserzirkulationen ist insbesondere für die gleichmässige Wirksamkeit der Mikroben und Bakterien im Belebtschlamm von Bedeutung, auch bei sehr unterschiedlichen äusseren Temperaturen, die beispielsweise zwischen Sommerbetrieb und Winterbetrieb auftreten. Dadurch wird auch sichergestellt, dass die biologische Wirksamkeit besonders hoch ist und bleibt, ohne dass es Heizvorrichtungen oder dergleichen bedarf.

Die Bodenfolie 5 und/oder die gelochte Folie 6 weisen eine Dicke von etwa 1 bis 1,5 mm auf und sind zweckmässig aus synthetischem Kautschuk gebildet.

Das Herstellen der gelochten Folie 6 mit den Luftaustrittsöffnungen 11 erfolgt in vorteilhafter Weise derart, dass von einer Rolle eine fortlaufende Bahn einer Nadelmatrix zugeführt wird, die entsprechend geformte konische Nadeln in parallelen oder versetzten Reihen aufweist, die mit entsprechender Kraft in eine vorwählbare Tiefe der Folie 6 eingedrückt werden können. Als besonders zweckmässig hat es sich erwiesen, die Nadeln zu beheizen. Durch die Hitzeeinwirkung verfestigt sich die Innenwandung der Luftaustrittsöffnungen 11, so dass stets gleichmässige Bedingungen für den Luftaustritt geschaffen werden.

Anstelle der Beheizung der Nadeln kann auch eine Zufuhr von Lösungsmittel vorgesehen sein, wobei dann die Innenflächen der Luftaustrittsöffnungen 11 angelöst werden und wobei sich eine Versteifungsschicht ausbildet.

Die vorbeschriebene Einrichtung zum feinblasigen Belüften von Wasser kann in verschiedenen Längen hergestellt werden und insbesondere in Belebungsbecken von biologischen Kläranlagen eingesetzt werden. Sie kann aber auch zur Sauerstoffzufuhr in Fischzuchtteichen, Karpfenteichen oder dergleichen Verwendung finden, wobei die Luftzufuhr über die Luftzuführöffnung 9 von einem einfachen Gebläse an einem Traktor geliefert werden kann. In einfachen Fällen genügt auch der Anschluss an Pressluftflaschen zur zeitweiligen gesteuerten Zufuhr von Luft oder Sauerstoff.

Es ist ferner möglich, die beschriebene Einrichtung auch zur Verbesserung des Sauerstoffgehaltes von fliessenden Gewässern, Flüssen oder Bächen einzusetzen.

Die Erfindung ist nicht auf das dargestellte und beschriebene Ausführungsbeispiel beschränkt. Sie kann beispielsweise, wie bereits erläutert, zur Einspannung der Bodenfolie 5 in der gelochten Folie 6 Winkeleisen 1, 2 verwendet werden, es besteht auch die Möglichkeit, Flacheisen zu verschrauben oder Kunststoffprofile oder andere Metallprofile. Als Material für die Folien können Kunststoffe beliebiger Art Verwendung finden, die entsprechende Festigkeitseigenschaften und chemische Resistenz aufweisen. Die Luftzuführöffnung kann auch seitlich vorgesehen sein, der Abstand der Anordnung der Luftaustrittsöffnungen kann gegenüber dem beschriebenen Ausführungsbeispiel unterschiedlich gewählt sein. Es können auch über die Fläche einer gelochten Folie 6 verteilt unterschiedliche Formen von Luftaustrittsöffnungen 11 vorgesehen werden. Auch ist die Ausbildung und Anordnung der Luftzuführöffnung 9 und die Verbindung mit den entsprechenden Luftzufuhrrohren an sich beliebig.

**Patentansprüche:**

1. Einrichtung zum feinblasigen Belüften von Wasser durch unter dem Wasserspiegel angeordnete, an einer Luftzuführungsleitung angeschlossene Luftverteiler, bestehend aus einer Halterung mit einer in ihr eingespannten, gelochten Luftverteilerfolie (6), einer Luftzuführöffnung (9) und einer dichten Unterlage, gegen die sich die Luftverteilerfolie (6) bei fehlender oder geringer Luftzufuhr dichtend auflegt, wobei die dichte Unterlage aus einer ungelochten Bodenfolie (5) besteht, und die Bodenfolie (5) mit der gelochten Folie (6) in der Halterung festgeklemmt und verschraubt ist und ferner die gelochte Folie (6) im Bereich der Luftzuführöffnung (9) abgedichtet ist, dadurch gekennzeichnet, dass die Bodenfolie (5) und die gelochte Luftverteiler-Folie (6) an ihren Rändern verklebt und mittels Klemmprofilen (1, 2) verschraubt und festgeklemmt sind, dass über der gelochten Luftverteiler-Folie (6) zwischen den Klemmprofilen (1, 2) verlaufende, obere Stege (3) angeordnet sind und dass zur Abdichtung der gelochten Luftverteiler-Folie (6) im Bereich der Luftzuführöffnung (9) ein Abdichtrondell (10) mit der gelochten Folie (6) verbunden ist.

2. Einrichtung nach Anspruch 1, dadurch gekennzeichnet, dass unterhalb der Folie (5) untere Stege (4) angeordnet sind.

3. Einrichtung nach Anspruch 2, dadurch gekennzeichnet, dass die oberen Stege (3) und die unteren Stege (4) parallel verlaufend versetzt zueinander angeordnet sind.

4. Einrichtung nach Anspruch 2, dadurch gekennzeichnet, dass die oberen Stege (3) und die unteren Stege (4) sich kreuzend angeordnet sind.

5. Einrichtung nach Anspruch 1 oder folgenden, dadurch gekennzeichnet, dass die Bodenfolie (5) und/oder die gelochte Folie (6) eine Dicke von 1 bis 1,5 mm aufweist.

6. Einrichtung nach Anspruch 1 oder folgenden, dadurch gekennzeichnet, dass die Bodenfolie (5) und/oder die gelochte Folie (6) aus synthetischem Kautschuk gebildet ist.

7. Einrichtung nach Anspruch 1 oder folgenden, dadurch gekennzeichnet, dass die gelochte Folie (6) mindestens teilweise konisch ausgebildete Luftdurchtrittsöffnungen (11) aufweist.

8. Einrichtung nach Anspruch 7, dadurch gekennzeichnet, dass der Durchmesser der Luftdurchtrittsöffnungen (11) an der der Bodenfolie (5) zugewandten Seite der gelochten Folie (6) etwa 0,3 mm beträgt.

9. Einrichtung nach Anspruch 7 oder 8, dadurch gekennzeichnet, dass der Konuswinkel (12) der Luftdurchtrittsöffnungen (11) etwa 5° beträgt.

10. Einrichtung nach einem oder mehreren der Ansprüche 1 bis 9, dadurch gekennzeichnet, dass die gelochte Folie (6) an ihrer der Bodenfolie (5) zugewandten Oberfläche mit einer glasfaserverstärkten Schicht (13) versehen ist.

**Revendications**

1. Dispositif pour disperser des bulles d'air fines dans de l'eau par des distributeurs d'air disposés au-dessous du niveau libre de l'eau et raccordés à une canalisation d'arrivée d'air, constitué d'un support comportant une feuille trouée distributrice d'air (6), serrée dans ce support, un orifice d'arrivée d'air (9) et une paroi inférieure étanche contre laquelle s'applique de façon étanche la feuille distributrice d'air (6) en cas d'absence ou de diminution de l'arrivée d'air, la paroi inférieure étanche étant faite d'une feuille de fond non trouée (5) alors que la feuille de fond (5) est serrée et boulonnée avec la feuille trouée (6) dans le support et qu'en outre la feuille trouée (6) est rendue étanche au voisinage de l'orifice d'arrivée d'air (9), caractérisé en ce que la feuille de fond (5) et la feuille trouée distributrice d'air (6) sont collées le long de leurs bords et boulonnées et serrées ensemble à l'aide de profilés de serrage (1, 2), en ce que des nervures supérieures (3) passant entre les profilés de serrage (1, 2) sont disposées au-dessus de la feuille trouée distributrice d'air (6) et en ce qu'une rondelle d'étanchéité (10) est reliée à la feuille trouée (6) au voisinage de l'orifice d'arrivée d'air (9), pour y assurer l'étanchéité de la feuille trouée distributrice d'air (6).

2. Dispositif selon la revendication 1, caractérisé en ce que des nervures inférieures (4) sont disposées au-dessous de la feuille (5).

3. Dispositif selon la revendication 2, caractérisé en ce que les nervures supérieures (3) et les nervures inférieures (4) sont disposées parallèlement en étant décalées mutuellement.

4. Dispositif selon la revendication 2, caractérisé en ce que les nervures supérieures (3) et les nervures inférieures (4) sont disposées en croix.

5. Dispositif selon l'une des revendications 1 et suivantes, caractérisé en ce que la feuille de fond (5) et/ou la feuille trouée (6) ont une épaisseur de 1 à 1,5 mm.

6. Dispositif selon l'une des revendications 1 et suivantes, caractérisé en ce que la feuille de fond (5) et/ou la feuille trouée (6) sont faites de caoutchouc synthétique.

7. Dispositif selon l'une des revendications 1 et suivantes, caractérisé en ce que la feuille trouée (6) possède des orifices de passage d'air (11) qui ont au moins en partie une allure conique.

8. Dispositif selon la revendication 7, caractérisé en ce que le diamètre des orifices de passage d'air (11), sur la face de la feuille trouée (6) qui est tournée vers la feuille de fond (5), est d'environ 0,3 mm.

9. Dispositif selon la revendication 7 ou 8, caractérisé en ce que l'angle de conicité (12) des orifices de passage d'air (11) est d'environ 5°.

10. Dispositif selon l'une ou plusieurs des revendications 1 à 9, caractérisé en ce que, sur sa surface tournée vers la feuille de fond (5), la feuille trouée (6) est munie d'une couche (13) armée de fibres de verre.

## Claims

1. Device for aerating water with fine air bubbles by means of air distributors arranged below the water level and connected to an air supply pipe, consisting of a holder having a perforated air distributor foil (6) clamped into it, an air supply opening (9) and an impervious support against which the air distributor foil (6) places itself to form a seal when there is little or no air supply, the impervious support consisting of an unperforated bottom foil (5) and the bottom foil (5) together with the perforated foil (6) being clamped into and screwed down in the holder, the perforated foil (6), moreover, being sealed in the region of the air supply opening (9), characterised in that the bottom foil (5) and the perforated air distributor foil (6) are glued together at their edges and screwed and clamped fast by means of clamping profiles (1, 2), in that upper webs (3) extending between the clamping profiles (1, 2) are arranged above the perforated air distributor foil (6) and in that, in the region of the air supply opening (9), a sealing disc (10) is connected to the perforated air distributor foil (6) to seal the perforated air distributor foil (6).

2. Device according to claim 1, characterised in that lower webs (4) are arranged underneath the foil (5).

3. Device according to claim 2, characterised in that the upper webs (3) and lower webs (4) extend parallel to each other in staggered formation.

4. Device according to claim 2, characterised in that the upper webs (3) and the lower webs (4) are arranged to intersect each other.

5. Device according to claim 1 or the following, characterised in that the bottom foil (5) and/or the perforated foil (6) has or have a thickness of from 1 to 1.5 mm.

6. Device according to claim 1 or the following, characterised in that the bottom foil (5) and/or the perforated foil (6) is or are made from synthetic rubber.

7. Device according claim 1 or the following, characterised in that the perforated foil (6) has at least partly conical air passage openings (11).

8. Device according to claim 7, characterised in that the diameter of the air passage openings (11) is approximately 0,3 mm on that side of the perforated foil (6) which faces the bottom foil (5).

9. Device according to claim 7 or claim 8, characterised in that the cone angle (12) of the air passage openings (11) is approximately 5°.

10. Device according to one or more of claims 1 to 9, characterised in that the perforated foil (6) is provided with a glass fibre reinforced layer (13) on the surface facing the bottom foil (5).

# FIG.1

# FIG.2

# FIG.4

# FIG.3